# EUROPEAN PATENT APPLICATION

(11) **EP 1 389 764 A1**
(43) Date of publication of application: **18.02.2004**
(21) Application number: 02102548.1
(22) Date of filing: 07.11.2002
(51) Int. Cl.: G06F 17/30

(54) **Database table filtering system**

(30) Priority: 14.08.2002 CA 2398103
(71) Applicant: March Networks Corporation, Ottawa, Ontario K2K 2X3 (CA)
(72) Inventor: BAYNGER, Michael, Ottawa, Ontario K1Y 0W5 (CA)
(74) Representative: Harding, Richard Patrick

(57) **Abstract**

In a computer system, a method for displaying on a display device a user interface used for filtering data in an original data set is disclosed. The original data set is displayed on the user interface in a table format having dimensions and values. A table content constraint system is displayed in conjunction with the table, which includes a constraint bar having at least one filter associated with at least one dimension of the table. In response to actuation of a filter, a filter input area is displayed. A filter input from the filter input area is received from a user. The original data set is filtered according to the filter input, and a modified data set is displayed which is derived by filtering the original data set according to the filter input. The filter input is displayed on the constraint bar.

## Description

### Field of the Invention

The present invention relates to computer-implemented database systems, and specifically to a method and system for managing and manipulating large tables of data.

### Background of the Invention

A database system is a set of computer programs used by a front-end user to store and retrieve data. Such data is often limited to letters, numerals, symbols, and other text characters, but may include any data that may be stored by a computer. Most database systems store data in tables. In a typical user interface, a table is a series of rows, also called records. The rows are divided into one or more columns. Each column is typically labeled at the top with the name of a common attribute that is shared by the items across all of the rows. The label is typically referred to as a column header. The intersection of a row and column is referred to as a field. Each field contains the data for each intersecting row and column.

Most database systems are divided into two components: A database engine for storing, manipulating and retrieving data, and a database front-end or user-end for providing an interface to the user, sending commands to the engine and interpreting the engine's responses to commands. The front-end communicates with the engine by sending the engine commands. The front-end sends the engine commands by calling application programming interface functions (APIs) that are supported by the engine. The engine communicates with a front-end by returning information to the front-end at the conclusion of an API call. Typical APIs supported by engines include those for defining a table, adding a record, moving within the table to a different record, retrieving a record, changing a record, and deleting a record.

Tables may be single-columned or multi-columned tables of data. These tables allow the user to view large amounts of items in an organized manner as rows of multi-columned data. While such tables are generally acceptable means of presenting structured data, tables with large populations of data items are difficult to manage. For large populations of table items, the user is typically able to scroll down through the list by means of a scroll bar at the side. In some cases, the user can reload the table with sequential pages of data. However, while the methods of scrolling and reloading may help a little, a larger table may still be difficult to manage.

In many software applications, the user can sort the data in these tables by clicking on the column header. Sorting can be helpful in locating particular items if their ordinal arrangement for a particular attribute or dimension is known. However, for large populations of data, locating particular items can still take a considerable amount of time.

Most engines also support APIs for submitting queries. A query is a set of instructions to combine, filter, and sort the contents of one or more tables. Queries are usually expressed in one of several common query languages, such as Structured Query Language (SQL). However, even tables generated from a database query may return an overwhelming amount of data in response.

One object of the present invention is to alleviate the disadvantages of the prior art. The above object is met by the combination of features of the main claims; sub-claims disclose further advantageous embodiments of the invention.

### Summary of the Invention

Disclosed is a multi-dimensional table filtering system which allows users to easily specify parameters of constraint for each column in such tables. Applying the constraint will reduce the population of the list to show only the items that meet the specified criteria. The constraints can be applied to more than one column in order to reduce the population even further. The direct visual and functional association between filter controls and the columns of data makes their operation very intuitive. It also allows for multiple filters to work in parallel.

The mechanism swaps the types of controls into the constraint area according to the state of its operation and/or the type of filter logic selection mechanism required. For example, one embodiment uses a button mechanism to initiate the application of a filter. This button can launch any other type of mechanism, such as a drop-down list or dialogue box, in order to give the user a means of selecting a constraint. A control mechanism is used to launch or edit or remove the application of constraint filters.

Thus, according to one aspect, the invention provides a computer system running an application for displaying on a display device a user interface used for filtering data in an original data set organized in a table to display a modified data set according to a received filter input, the system further includes a filter input area for receiving a filter input, the computer system characterized in that a table content constraint system operating in conjunction with the table includes a constraint bar having a filter associated with a dimension of the table.

The table content constraint system may comprise an interaction control for providing filter input areas and for displaying the filter input areas with received filter inputs, and a refinement mechanism within the constraint bar for selecting appropriate interaction controls for providing appropriate filter input areas.

In another aspect, there is provided a table content constraint system running on a computer system for filtering data in an original data table to display a modified data table, characterized in that a refinement bar allows user interaction, a refinement mechanism is within the refinement bar, and an interaction control is within the refinement mechanism, wherein the interaction control includes a filter input area for receiving a constraint by which to filter the data in the original table to display the modified data table. The refinement mechanism selects an appropriate interaction control for providing a filter input area based on user interaction with the refinement bar.

In another aspect, the invention provides a method in a computer system, for filtering data in an original data set to display a modified data set, wherein the original data set is displayed on the user interface in a table format having dimensions and values, the method comprising displaying a table content constraint system in conjunction with the table, including a constraint bar having at least one filter associated with at least one dimension of the table, the method being characterized in that in response to actuation of a selected filter, an appropriate interaction control for displaying a filter input area is selected, a filter input is received from a user from the filter input area, the original data set is filtered according to the filter input, and a modified data set, which is derived by filtering the original data set according to the filter input is displayed, wherein the filter input area with the filter input is displayed on the constraint bar.

The preceding paragraphs do not necessarily disclose all the features essential for defining the invention; the invention may reside in a sub-combination of the disclosed features.

Other aspects and advantages of embodiments of the invention will be readily apparent to those ordinarily skilled in the art upon a review of the following description.

### Brief Description of the Drawings

Embodiments of the invention will now be described in conjunction with the accompanying drawings, wherein:
Figure 1 illustrates an exemplary operating environment that can be used for the present invention;
Figure 2 illustrates the user end view of an example data table with a table constraint system according to one embodiment of the invention;
Figure 3 illustrates the user end view of Figure 2 displaying example data;
Figures 4 to 8 illustrate the user end view of Figure 3 at various stages of activation of the table constraint system;
Figure 9 illustrates the user end view of Figure 3 after the data has been filtered in one example;
Figure 10a illustrates the user end view of Figure 3 after the data has been filtered by two constraints using an "AND" function in one example;
Figure 10b illustrates the user end view of Figure 3 after the data has been filtered by two constraints using an "OR" function in one example;
Figure 11 illustrates the user end view of Figure 3 showing a unique value list menu which displays each of the unique values of the associated attribute;
Figure 12a illustrates one example of a custom control drop-down menu launched by the filter control;
Figure 12b illustrates another embodiment of a filter type that may be used;
Figure 13 is a schematic drawing of the component of the filter control of the present invention;
Figure 14 illustrates how table constraint filters resize according to its associated column; and
Figure 15 is a flowchart illustrating interaction control swapping for a Button,Edit,Combo refinement mechanism.

This invention will now be described in detail with respect to certain specific representative embodiments thereof, the materials, apparatus and process steps being understood as examples that are intended to be illustrative only. In particular, the invention is not intended to be limited to the methods, materials, conditions, process parameters, apparatus and the like specifically recited herein.

### Detailed Description of the Preferred Embodiments

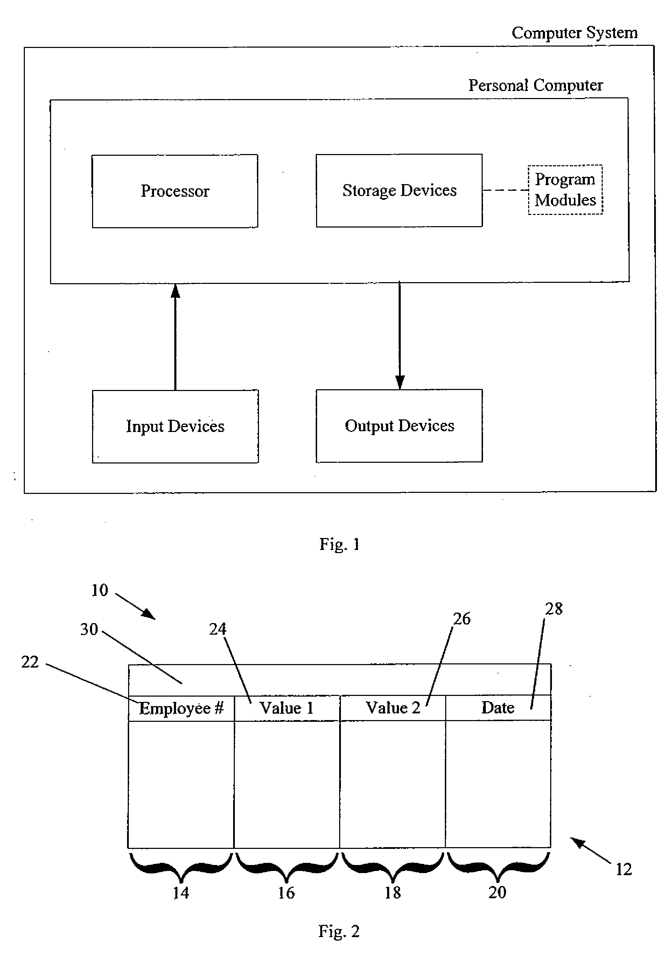

Figure 1 illustrates an exemplary operating environment that can be used in accordance with the present invention. In the exemplary environment, a computer system is comprised of a personal computer having one or more processors connected to one or more data storage devices, such as a fixed or hard disk drive, a floppy disk drive, a CD-ROM drive, a tape drive or other device that store one or more data, data structures, or computer executable instructions for the personal computer. A number of program modules may be stored in the data storage devices, including an operating system, application programs and other program modules. It will be recognized that the preceding is an exemplary environment only and that the invention may be used with any type of system in conjunction with any suitable desktop or web browser application.

The user may enter commands and information into the personal computer through an input device such as a keyboard or pointing device such as a mouse. Other input devices may include a microphone, joystick, game pad or the like. These and other input devices are often connected to the processing unit through a serial port interface that is coupled to the system bus, but may be connected by other interfaces such as a parallel port, game port or universal serial bus. A monitor or other type of output device is used to output or display information to the user.

While the invention is described in the general context of computer executable instructions of a computer program that runs on a personal computer, those skilled in the art will recognize that the invention also may be implemented in combination with other program modules with other computer system configurations.

Figure 2 shows an illustrative table constraint system 10 in conjunction with a data table 12. While the invention is described in terms of a multi-columned table, one skilled in the art will recognize that it may also be used in conjunction with a single-columned table. The table in this example includes columns 14, 16, 18, 20 of attributes and column headers 22, 24, 26, 28. The data table 12 may be the result of a database query or may be a fixed set of data. The table constraint system 10 presents the user with an additional set of controls which operate in tandem with the existing elements of the table. Preferably, there is one additional control or constraint filter, for each dimension or column in the table. The constraint filters are located in the table content constraint system bar 30. While bar 30 is illustrated as being above the column headers, one skilled in the art will recognize that the bar may also be below the columns headers, or be integral with the column headers. The constraint system 10 is part of a stand alone control. In an alternate embodiment, the system is part of another control such as Microsoft's Listview control. A constraint filter is activated by clicking on it and entering a textual or other input which is used to describe to the software system how the table contents should be filtered. The constraint filter input might be a textual string used for pattern matching, a Boolean expression used for logical filtering or a graphic element used for item type matching.

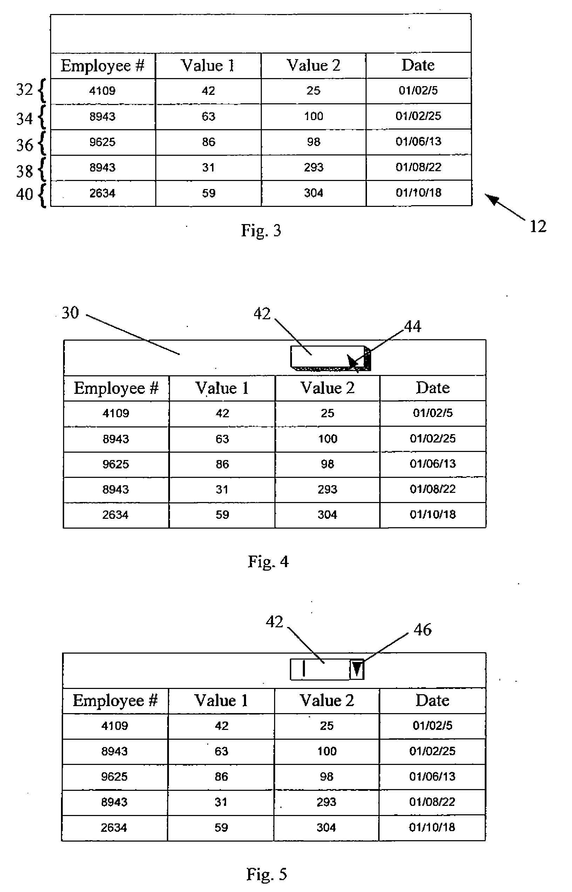

Figure 3 shows the constraint system and table of Figure 2 displaying a data set. The data set includes rows 32, 34, 36, 38, 40 of data objects described by the columns 14, 16, 18, 20 of attributes. The illustrated constraint system can accommodate any number of columns in the table. As will be recognized by those skilled in the art, the constraint system could alternately be implemented for rows of attributes describing columns of data objects.

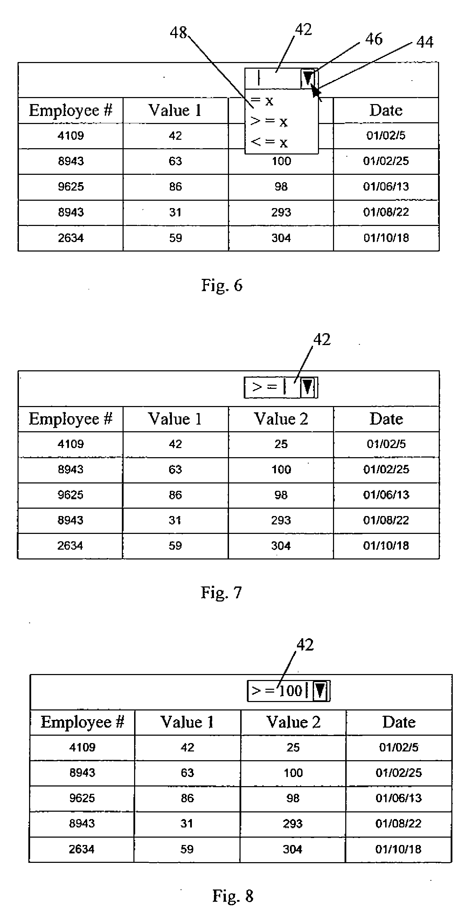

In a preferred embodiment, the constraint filters are launched as illustrated in Figures 4 to 8. In this embodiment, filter controls are not displayed until an actual filter is applied. The constraint filter 42 responds to the user's cursor 44 being positioned within its boundaries as seen in Figure 4. Figure 5 shows that the user has activated the constraint filter 42 for the "Value 2" column by moving the cursor 44 into constraint bar 30 and clicking on the filter 42 using a pointing device. As a result the control 42 has changed into an input mechanism with a drop-down menu button 46. The initial input is taken from the item in its column which the user has selected by clicking on a given row. Figure 6 shows the drop-down menu 48 displayed by the filter control 42. The drop-down menu 48 displays the comparison modes by which this constraint filter 42 of the column may be applied to this data set. For example, the drop-down menu 48 for the "Value 2" column is displayed. By selecting a comparison mode, a user can check whether any member of the data set has a value which meets the criteria of the comparison mode. In this example, the comparison mode provides a choice of three possible logical operators which are "x", "> = x" or "< = x", where "x" is input into the filter for this column. The user may or may not wish to use the given operators. Alternatively, the user could bypass the down arrow and just type directly into the input box.

Figure 7 illustrates the constraint filter 42 after the user chooses the "> =" comparison mode from the drop-down menu. The user may enter data directly as is indicated by the fact that the value component of the text is highlighted. Figure 8 illustrates the complete input into the constraint filter 42, which may have been entered with or without the use of the drop-down menu 48. The filter control 42 is displayed so the user is aware of how the data is filtered.

In another embodiment, the filter control is displayed to the user and is blank when inactive.

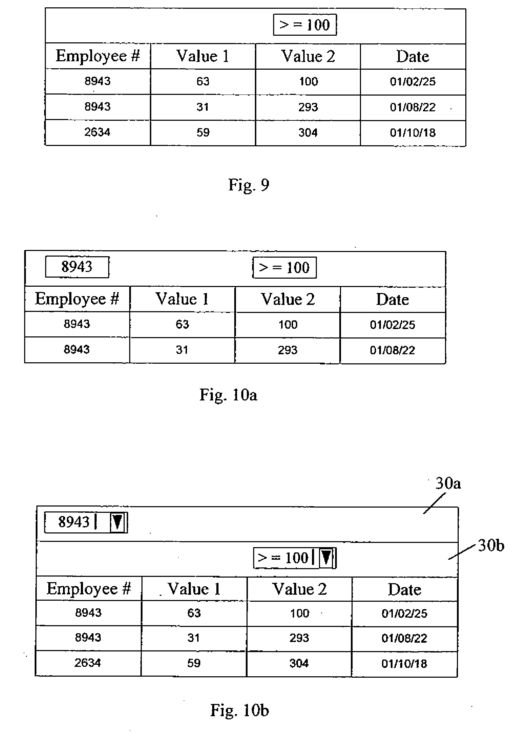

Figure 9 shows how the contents of the table have been reduced to show only the items that meet the criterion of the constraint filter. The user has typed in "100" as the value for "x" and has pressed the <ENTER> key on the keyboard to execute the filtering action. As will be recognized by one skilled in the art, different methods of activating and exiting the filter for the purposes of executing the filters can be used without changing the functionality of the illustrated embodiment. For example, the user could click on the interface to execute the filter.

As mentioned above, this filtering mechanism is useful in reducing a data set to only those data required by the user. To this end, the user may have multiple criteria by which to filter large quantities of data into manageable amounts. The filter mechanism of the present invention permits the use of multiple constraint filters to narrow down the data set. Figure 10a shows the contents of the table after the user has selected "Value 2" filter "> = 100" and "Employee #" filter "8943". It can be seen that the table contents have been reduced even further to display only the items that meet criteria of two combined constraint filters. That is, the control filtered the data items as Value 2 "> = 100" AND having employee number "8943".

The filter system may also provide an OR function for filtering, as illustrated in Figure 10b. In one embodiment, multiple constraint bars 30a, 30b may be used. If the user selects Value 2 filter "> = 100" in bar 30a, and "employee #" filter "8943" in bar 30b, the data is filtered to show item where Value 2 is greater or equal to 100 OR employee number is 8943. In another embodiment, a drop-down menu could be provided with user-selectable filter options such as "AND" or "OR".

An active constraint filter can be deactivated by clicking in the text box of the control when it is active. Contents of the box are highlighted and the user can hit either the <DELETE> or the <BACKSPACE> keys to remove the text. Hitting the <ENTER> key when the constraint filter control is empty will execute the removal of the constraint and the contents of the table will be expanded accordingly. Alternatively, a drop-down menu could be provided (as is described below) with a "No Refinement" option.

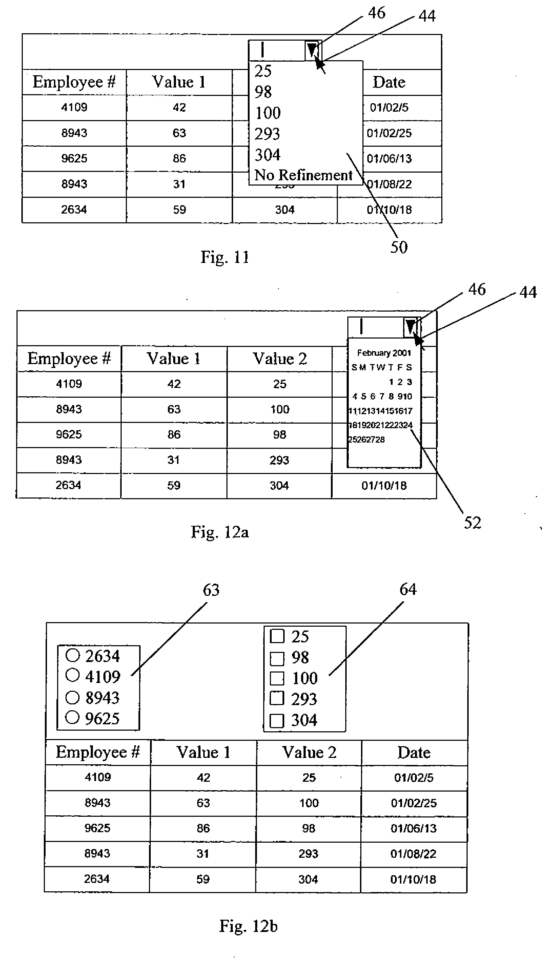

Figure 11 illustrates an alternate embodiment of the filter control. In this embodiment, when the user actuates the drop-down menu button 46, a unique value list menu 50 is displayed. The unique value list 50 enumerates the unique values of the attribute with which that filter control is associated. For example, the unique value list of Figure 11 displays "25", "98", "100", "293", and "304" - an exhaustive list of all the data values for "Value 2". The unique value list 50 displayed in a drop-down menu is used by the user to select a value with the pointing device 44. This selection is used to filter the data set. Figure 11 also illustrates a "No Refinement" option in the drop down menu which may be used to deactivate the filter as described above.

Figure 12a illustrates another embodiment of the constraint filter for custom control for filtering of non-textual data items, such as colour, icons, bitmaps or sound. The user interacts with the custom control to input non-textual filters for the attribute with which the custom control is associated which are used to filter the data. When the user activates the drop-down menu button 46, a modified drop-down menu is displayed, in this example, a calendar 52 is launched for the "Date" column. The user can click on a single date in the calendar or may drag the cursor control device 44 across range or dates, to either enter a single date or a range of dates, respectively, in the constraint filter.

An alternative embodiment is to permanently display a set of edit controls in the constraint bar, with no swapping (as described below) or they could be hard wired filters set to either "on" or "off". Figure 12b illustrates the use of a "radio button" menu 63 and a "check box" menu 64, which may be used for mutually-exclusive selections or parallel selections, respectively. One skilled in the art will recognize that any type of conditional statement or hard wired filter may be used.

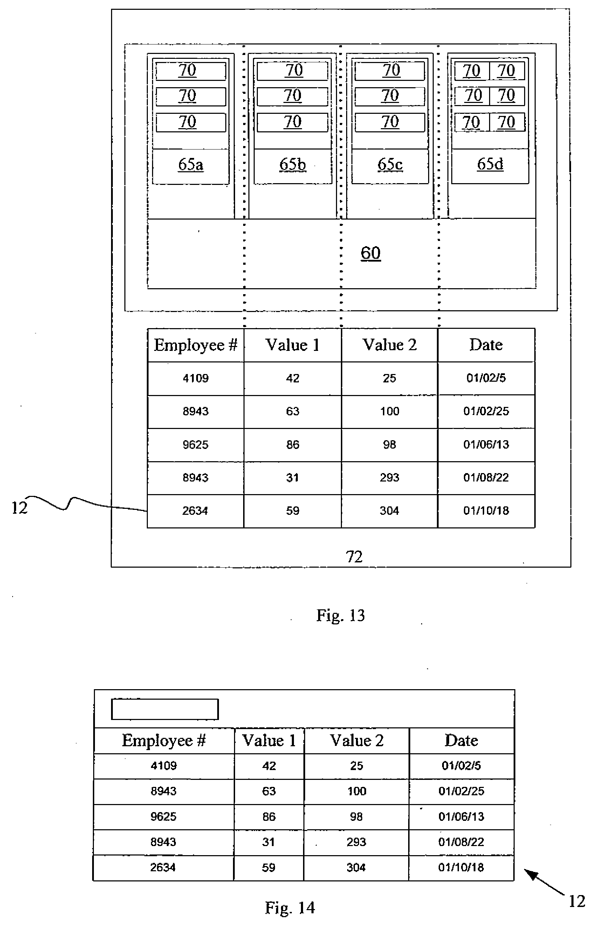

Figure 13 illustrates the general design of this invention in conjunction with data table 12. The constraint system comprises three main sets of components: the refinement bar 60 is the outermost layer and contains intelligent refinement mechanisms 65a, 65b, 65c, 65d that in turn consist of one or more sets of interaction controls 70. A set of interaction controls may include one or more interaction controls depending on the specific desired implementation.

The refinement bar 60 manages the visibility placement and layout of the refinement mechanisms 65a, 65b, 65c, 65d. This includes the horizontal scrolling and resizing of columns to synchronize with the table component, as seen in Figure 14. The constraint filter controls take their size from their corresponding columns in the table. This means that if the user resizes the columns the constraint filters will automatically resize also. It can be seen in Figure 14 that the "Employee #" constraint filter has been widened by the resizing of its associated column. This alignment between the sets of associated controls adds to the legibility and ease of use of the system.

The refinement mechanisms 65a, 65b, 65c, 65d also determine which interaction control must be used at a given time in order to carry out the various stages of applying and removing filters to a given column. The design of the invention permits high degrees of flexibility in the relations between these three sets of interaction controls. For example, multiple refinement bars could be used in tandem to present a more complex method of constraining the data, as described above for use with an "OR" function. Also a refinement mechanism could consist of groups of interaction controls, for example refinement mechanism 65d which has a paired sets of interaction controls 70 which may specify date and time as seen in Figure 13.

The refinement mechanisms 65a, 65b, 65c, 65d are intelligent components which, by working with the refinement bar 60, manage their sub-components in such a way that they smoothly swap individual or sets of interaction controls 70, as is described below.

For a given interaction control set, only one control will be displayed at a time. The state changes that determine the display of given interaction control may be individualized according to what is appropriate for each user interface design. In the current embodiment a typical example of a refinement mechanism will use a button to initiate the interaction, a drop down list to make preset choices available to the user, and an edit control to contain the user's specific choice when the filter is applied.

The refinement bar 60 works in tandem with a given table of data, in this example being table 12. These two components work tightly together to arrive at a coordination between the columns of data (in this example, columns 14, 16, 18, 20 of table 12) and the refinement mechanisms 65a, 65b, 65c, 65d that are available for filtering them. The two components have a common parent object which acts as a manager to manage the interaction relationships between refinement bars and tables. The manager component 72 is responsible for the creation and layout of the refinement bar 60 and table components. The manager 72 can support multiple tables and multiple refinement bars if so desired. In one embodiment, the entire assembly itself resides within a given application. If the table 12 and refinement mechanisms 65a, 65b, 65c, 65d are explicit, manager 72 is used to provide cooperation between them. If either the refinement mechanisms 65a, 65b, 65c, 65d or table 12 is extended to incorporate the functionality of the other, then the manager 72 can be replaced by direct communication between the refinement mechanisms 65a, 65b, 65c, 65d and table 12.

The manager 72 routes notifications to the refinement bar 60 from the table 12 which, in the current embodiment, is a Microsoft Listview control. One skilled in the art will understand that although the invention is being described in conjunction with the Microsoft Listview control as the table component that any comparable control may also be used.

When using the Listview control, the Listview's standard notification messaging system is used as a means of tying it to the refinement bar. For example, the following notifications are handled in the current embodiment:
HDN_BEGINTRACK:
HDN_ENDTRACK:
HDN_TRACK:
HDN_BEGINDRAG:
HDN_ENDDRAG:
HDN_ITEMCHANGED:

As a parent object, the manager 72 also establishes a direct route of communication back from the refinement bar 60 to the table 12. The refinement bar 60 is given a reference to the table 12. The purpose of this communication path is to request specific information as it is required. Whenever the header information has changed, the table generates a custom WM_REFRESHSCROLLINFO message to refresh its scroll information. This causes the table to update its own internal variables:
m_nHorzScrollMax
m_nHorzScrollPageSize
m_nHorzScrollPos
which track the total column width, page size (total visible width), and horizontal position, respectively. The refinement bar 60 also responds to the WM_REFRESHSCROLLINFO message via the manager 72, and it in turn will request these values from the table in order to synchronize its physical characteristics with the table.

The alignment between the table and the refinement bar could be implemented in various other manners. For example, if the table was implemented natively, then the notification messages from the table to the refinement bar could also be carried out through direct communication. This would effectively join the table and the refinement bar and the refinement bar could be seen as an optional extension of the table.

In the current embodiment, the manager functionality 72 is embedded within a panel window control which also manages the physical layout of both the table 12 and the refinement bar 60. However it is clear that the manager 72 could also exist as a component which has none of that responsibility.

The filtering function is carried out by the refinement bar 60. As mentioned above, the refinement bar 60 contains one or more intelligent refinement mechanisms 65a, 65b, 65c, 65d that in turn consist of one or more interaction controls 70. The refinement mechanisms 65a, 65b, 65c, 65d are inserted into the refinement bar 60 as needed. For example, a column may be added to the table containing "Duration" data with the following function call:

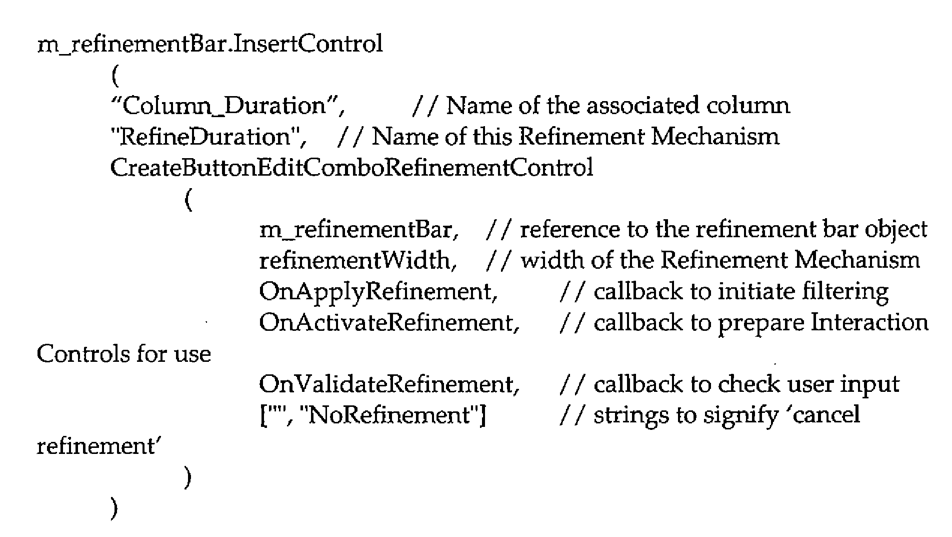

This example which has an embedded function call to CreateButtonEditComboRefinementControl refers to a refinement mechanism comprising three interaction controls - a button control, an edit control, and a combo control. These interaction controls are swapped as they are needed, based on the user interaction with the refinement bar. Other types of refinement mechanisms with different sets of Interaction Controls are created via these function calls:
CreateButtonEditDialogRefinementControl
CreateButtonEditComboDialogRefinementControl

The invention could support a wide variety of these sets. Each set of interaction controls can be determined according the particular types of filtering data and capabilities that are deemed most appropriate to the given column of data.

The refinement mechanisms 65a, 65b, 65c, 65d determine which interaction control 70 is to be used at a given time to carry out the various stages of applying and removing filters to a given column. In this way, the refinement mechanisms 65a, 65b, 65c, 65d are intelligent components which work with the refinement bar 60 to manage their sub-components in such a way as to smoothly swap individual or sets of interaction controls 70, thus preventing visual side effects and distortions. In other words the user is unaware of the complexities of control swapping as they use the invention.

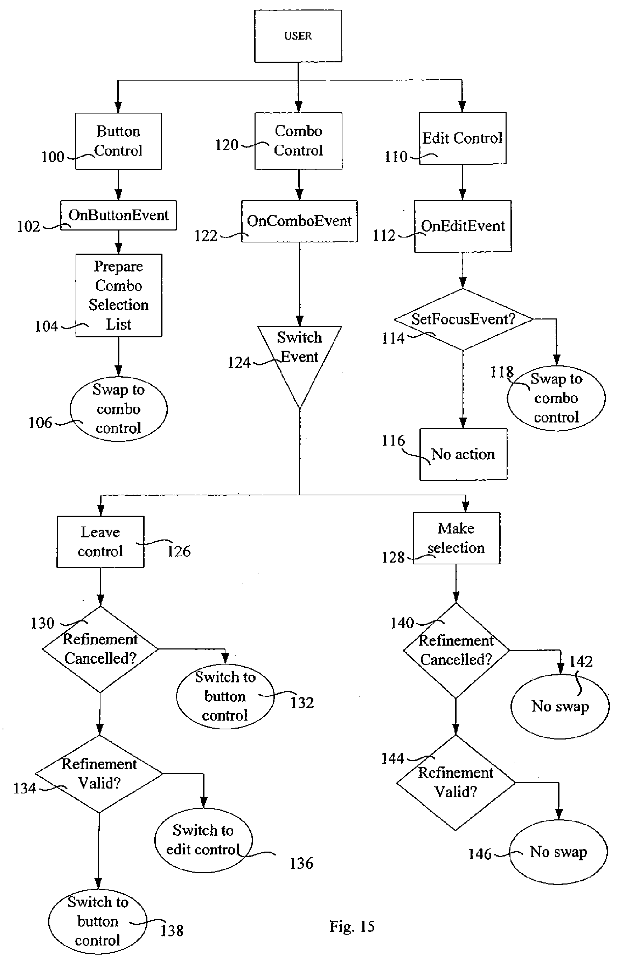

Figure 15 is a flowchart illustrating the way in which control swapping takes place in response to user input events. The example is based on a ButtonEditComboRefinementControl. In step 100, the user interacts with the button control, which triggers step 102 OnButtonEvent. In step 104, the combo selection list is prepared and in step 106, the swap to combo control takes place. Alternatively, in step 110, the user interacts with the edit control, which triggers step 112 OnEditEvent. In step 114, it is determined if focus event is set (SetFocusEvent). If not, then no action is taken at 116. If yes, then the swap to combo control takes place at 118.

Alternatively, in step 120, the user interacts with combo control, which triggers step 122 OnComboEvent. In step 124, the event is switched, and the user either makes a final choice or leaves the control at step 126, or the user makes a selection from a drop-down menu at step 128. If the user elects step 126, it is determined if the refinement is cancelled at step 130. If yes, then the filter is cleared and the mechanism switches to button control at 132. If not, then it is determined if the refinement is valid at 134. If yes, the filter is applied, and the mechanism switches to the edit control at 136. If not, the filter is cleared and the mechanism switches to button control at 138.

If the user elects step 128, it is determined if the refinement is cancelled at step 140. If yes, then the filter is cleared and no swap takes place at 142. If not, then it is determined if the refinement is valid at 144. If yes, the filter is applied, and no swap takes place at 146.

The filtering action triggered by the refinement mechanisms are accomplished using two lists: a main list containing all of the original elements and a refined list which ultimately is used to populate a given table. As the code segment below will show, the Main List is passed a callback function which checks the elements of the list for inclusion in the Refined List.

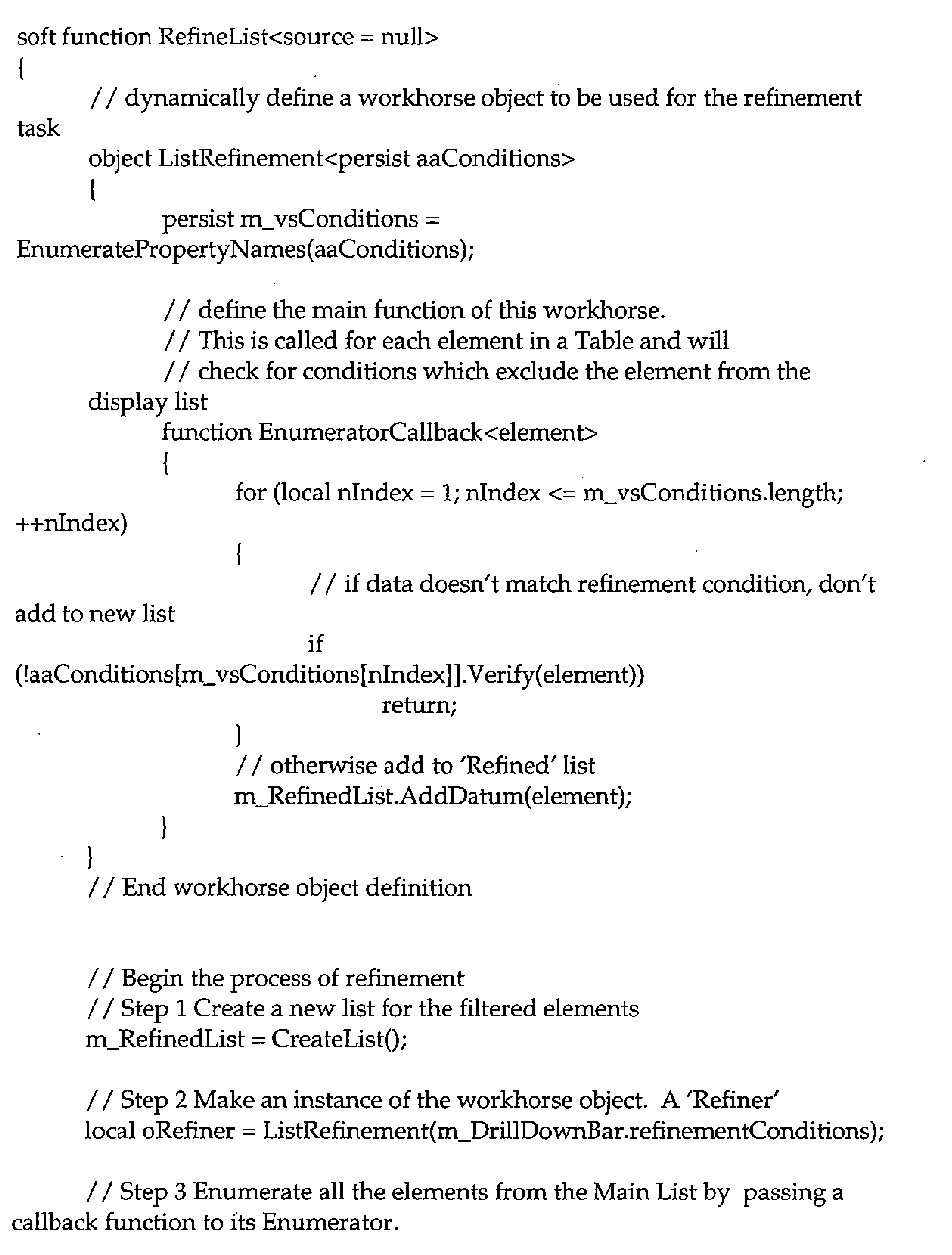

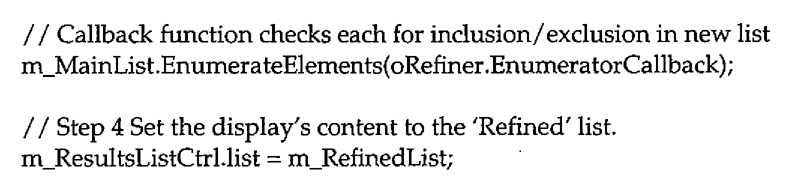

While the invention has been described in terms of a database table, one skilled in the art will recognize that the invention may be used in conjunction with any type of data set, such as an email archive or as "hits" in response to an internet search request. Numerous modifications may be made without departing from the spirit and scope of the invention as defined in the appended claims.

## Claims

1. A computer system running an application for displaying on a display device a user interface used for filtering data in an original data set organized in a table (12) to display a modified data set according to a received filter input, the system further including a filter input area (42) for receiving the filter input, the computer system **characterized in that**:
a table content constraint system (10) operating in conjunction with the table (12) includes a constraint bar (30) having a filter associated with a dimension of the table (12).

2. The system of claim 1, **characterized in that** the table content constraint system (10) comprises:
an interaction control (70) for providing filter input areas and for displaying the filter input areas with received filter inputs; and
a refinement mechanism within (65a) the constraint bar (30) for selecting appropriate interaction controls (70) for providing appropriate filter input areas.

3. The system of claim 1 or 2, **characterized in that** the filters in the constraint bar (30) are not displayed prior to actuation of a selected filter.

4. The system of claim 1, 2 or 3, further **characterized in that** including multiple filter input areas are associated with multiple attributes, wherein when multiple filter inputs are received the original data set is filtered according to the filter inputs using either an "AND" or an "OR" function.

5. A table content constraint system (10) running on a computer system for filtering data in an original data table to display a modified data table, **characterized in that**:
a refinement bar (60) allows user interaction;
a refinement mechanism (65a) is within the refinement bar (60); and
an interaction control (70) is within the refinement mechanism, wherein the interaction control (70) includes a filter input area for receiving a constraint by which to filter the data in the original table to display the modified data table; wherein the refinement mechanism (65a) selects an appropriate interaction control (70) for providing a filter input area based on user interaction with the refinement bar (60).

6. A method, in a computer system, for filtering data in an original data set to display a modified data set, wherein the original data set is displayed on the user interface in a table format (12) having dimensions and values, the method comprising displaying a table content constraint system (10) operating in conjunction with the table (12), including a constraint bar (30) having at least one filter associated with at least one dimension of the table, the method being **characterized in that**:
in response to actuation of a selected filter, an appropriate interaction control (70) is selected for displaying a filter input area (42);
a filter input is received from a user from the filter input area (42);
the original data set is filtered according to the filter input; and
a modified data set which is derived by filtering the original data set according to the filter input is displayed, wherein the filter input area (42) with the filter input is displayed on the constraint bar.

7. The method of claim 6, further **characterized in that** filters are displayed only after actuation of the filters.

8. The method of claim 6 or 7, wherein there are multiple filters associated with multiple attributes, the method being further **characterized in that**:
multiple filter inputs are received from the user;
the original data set is filtered according to the filter inputs using "AND" or "OR" functions; and
a modified data set, which is derived by filtering the original data set according to the multiple filter inputs, is displayed.

9. A computer program **characterized in that** the program has program code means for performing all the steps of claim 6, 7 or 8 when said program is run on a computer.

10. A computer program product **characterized in that** the product includes program code means stored on a computer readable medium for performing the method of claim 6, 7 or 8 when said program product is run on a computer.
